## Europäisches Patentamt
### European Patent Office
### Office européen des brevets

(19)

(11) Veröffentlichungsnummer: **0 031 525**
**A2**

(12)

# EUROPÄISCHE PATENTANMELDUNG

(21) Anmeldenummer: **80107836.1**

(51) Int. Cl.³: **G 06 K 19/08**

(22) Anmeldetag: **11.12.80**

(30) Priorität: **14.12.79 DE 7935267 U**

(43) Veröffentlichungstag der Anmeldung: **08.07.81**
**Patentblatt 81/27**

(84) Benannte Vertragsstaaten: **BE CH DE FR GB IT LI LU NL SE**

(71) Anmelder: **GESELLSCHAFT FÜR ZEIT- UND INFORMATIONSERFASSUNG MBH, Industriestrasse 6, D-8034 Germering (DE)**

(72) Erfinder: **John, Robert B., Zamboninistrasse 23, D-8000 München 19 (DE)**

(74) Vertreter: **Ter Meer-Müller-Steinmeister Patentanwälte, Triftstrasse 4, D-8000 München 22 (DE)**

(54) **Identifizierungskarte.**

(57) Die mehrschichtige Identifizierungskarte weist zwei miteinander verbundene Deckschichten (3, 4) auf, zwischen denen ein Informationsträger (2) eingebracht ist, auf den codierte Information mit einer Druckfarbe aufgedruckt ist, welche für Infrarotlicht nicht oder nicht voll durchlassig ist. Der Code ist von der Außenseite der Karte mit unbewaffnetem Auge nicht erkennbar. Als Datenträgerschicht (2; 2, 5) kommt auch die Innenseite einer der Deckschichten infrage. Die Identifizierungskarte läßt sich sehr wirtschaftlich herstellen.

## PATENTANWÄLTE
# TER MEER-MÜLLER-STEINMEISTER

Beim Europäischen Patentamt zugelassene Vertreter — Professional Representatives before the European Patent Office
Mandataires agréés près l'Office européen des brevets

Dipl.-Chem. Dr. N. ter Meer
Dipl.-Ing. F. E. Müller
Triftstrasse 4,
D-8000 MÜNCHEN 22

Dipl.-Ing. H. Steinmeister
Siekerwall 7,
D-4800 BIELEFELD 1

0031525

Mü/vL                                          8. Dezember 1980


GESELLSCHAFT FÜR ZEIT- UND

INFORMATIONSERFASSUNG   mbH

Industriestrasse 6, D-8034 Germering


---

"Identifizierungskarte"

---

Priorität:   14. Dezember 1979, Bundesrepublik Deutschland,
             Ser.Nr.  G 79 35 267.3


BESCHREIBUNG

Gegenstand der Erfindung ist eine mehrschichtige
Identifizierungskarte mit in einer Datenschicht enthaltener
maschinell lesbarer, codierter Information und mit zwei
die Datenschicht einschließenden und miteinander festhaftend
verbundenen Deckschichten.

- 2 -

Karten zur Identifizierung und zur personenbezogenen Erfassung von Daten sind in zahlreichen Ausführungsformen bekannt. Am weitesten verbreitet sind Scheckkarten und Kreditkarten. Auch Kennkarten mit verschlüsselten, sichtbaren oder unsichtbaren, maschinenlesbaren auf oder in der Karte enthaltenen Codes sind bekannt, beispielsweise als Schlüsselkarten für Hotels, Garageneinfahrten, Labors mit Zugang nur für bestimmte Personen, für Safes und dergleichen. Zum Lesen der vorzugsweise unsichtbar in die Karte eingebrachten Identifizierungscodes sind induktive, kapazitive, mit codierten Strom- oder Spannungsimpulsen arbeitende und Infrarot-Lesegeräte entwickelt worden.

Beispiele für mit einem Infrarotlicht-Lesegerät entschlüsselbare Kennkarten sind in der DE-PS 25 38 956 beschrieben. Eine solche Kennkarte umfaßt zwei Schutzschichten, von denen wenigstens eine für Infrarotlicht durchlässig sein muß, und eine zwischen den Schutzschichten angeordnete Informationsschicht, die in codierter Form eingeprägte oder eingestanzte Markierungen enthält, die vom Infrarot-Lesegerät erfaßt und anschließend decodiert werden können. Aus dieser Druckschrift sind auch Maßnahmen zur Fälschungssicherung bekannt, die sicherstellen, daß die Informationsschicht bei einem unbefugten Auftrennen der Schutzschichten zerstört wird. Vergleichbare mehrschichtige

0031525

– 3 –

und ebenfalls vorzugsweise durch Infrarot-Lesegeräte auswertbare Identifizierungskarten sind in den DE-OSen
26 36 952 und 26 59 639 beschrieben.

Bekannt sind auch Identifizierungskarten, die zwischen zwei vorzugsweise lichtundurchlässigen Kunststoffdeckschichten eine Metallfolienschicht, beispielsweise
aus Kupfer, Eisen oder Aluminium enthalten, in welche in
bestimmter Musterverteilung Durchbrechungen beispielsweise durch Stanzen oder ein Photoätzverfahren eingebracht
sind, die entsprechend ihrem gegenseitigen Abstand und/oder
ihrer Größe und/oder ihrer gegeneinander verschobenen
Lage in Verbindung mit dazwischen stehengebliebenen Metallstegen einen Identifizierungscode bilden, der vorzugsweise über magnetische Leseköpfe induktiv, unter Umständen
auch kapazitiv erfaßbar ist. Ein gutes und in der Praxis
auch erprobtes Beispiel für einen solchen kartenartigen
Datenträger ist in der DE-OS 27 03 714 beschrieben. Auf
einem ähnlichen Prinzip, nämlich der Verwendung einer zwischen zwei Deckschichten eingeschweißten Silber- oder
Kupferfolie, in welche Code-Löcher eingebracht sind, beruht
der in der DE-PS 22 05 428 beschriebene Informationsträger.
Auch ist die Verwendung einer ferromagnetischen Werkstoffschicht mit lochförmigen Markierungen für Identitätskarten
aus der DE-OS 26 21 989 bekannt.

Allen diesen bekannten Typen von Kenn- oder Identifizierungskarten haftet der Nachteil an, daß ihre Herstellung relativ aufwendig ist, so daß der Preis für eine einzelne Karte, wenn ein Mindestmaß an Fälschungssicherheit
verlangt wird, ziemlich hoch liegt. So muß beispielsweise
bei den durch Infrarotlicht auswertbaren Karten nach der
DE-PS 25 38 956 bzw. nach der DE-OS 26 59 639 die codierte
Information in der betreffenden Schicht durch Stanzen,

0031525

- 4 -

durch einen gesteuerten Laser-Strahl oder dergleichen hergestellt werden. Gleichwohl ist die Informationspakkungsdichte auf der Karte relativ beschränkt, wenn Lese-Geräte mit vertretbarem technischen Aufwand verwendet werden sollen, so daß in der Regel nur relativ einfache Codes verwendet werden können. Die Karten mit einer Metallfolie zwischen zwei Schutzschichten dagegen sind einerseits auch relativ teuer, da das mit individuellen Code-Löchern zu versehende Metallplättchen separat zwischen die beiden entlang der Ränder anschließend zu verschweißenden Schutzschichten eingebracht werden muß. Karten dieser Art mit Metallfolie sind auch nur begrenzt fälschungssicher, da sich die Karte mit einigem Geschick spalten läßt, so daß ein Zugang zur eingeschweißten Metallfolie möglich ist.

Der Erfindung liegt damit die Aufgabe zugrunde, eine fälschungssichere Identifizierungskarte zu schaffen, die bei hoher Fälschungssicherheit wesentlich billiger herstellbar ist als bekannte Karten dieser Art, die sich aber gleichwohl mit vergleichsweise preiswerten Lese-Geräten auswerten läßt.

Die erfindungsgemäße Lösung dieser Aufgabe ist im Patentanspruch 1 angegeben.

Vorteilhafte Weiterbildungen des Erfindungsgedankens sind in Unteransprüchen gekennzeichnet.

Gemäß der Erfindung ist vorgesehen, die codierte Information auf die Datenträgerschicht aufzudrucken, und zwar vorzugsweise im Hoch- oder Offsetdruck oder mittels eines Siebdruckverfahrens. Die Zusammensetzung der Farbe ist so gewählt, daß - je nach Art des verwendeten Lese-Geräts, die Information durch Infra-

0031525

- 5 -

rotlichtbestrahlung und/oder induktiv ausgelesen werden kann. Das Aufdrucken der Informationsschicht kann entweder unmittelbar auf die Innenfläche einer der Deckschichten oder auf eine separate, zwischen die Deckschichten einzubringende Datenträgerschicht erfolgen. Im letztgenannten Fall jedoch sollte sich die Datenträgerschicht bei einem geeigneten Versiegelungsverfahren weitgehend homogen mit den vorzugsweise aus gleichem Material bestehenden Deckschichten verbinden lassen.

Das unmittelbare Aufdrucken der codierten Information auf die entsprechende Schicht (Deckschicht oder separate Datenträgerschicht) ist insbesondere für eine Massenherstellung solcher ja stets individuell auszustellenden Karten bei weitem billiger als alle bisher bekannten Verfahren zur Herstellung der oben beschriebenen Identifizierungskarten. Insbesondere läßt sich ohne Mehraufwand ein vergleichsweise komplizierter und schwer entschlüsselbarer Code mit einer Mehrzahl von Codesicherungselementen verwenden, wie weiter unten anhand eines Ausführungsbeispiels der Erfindung noch näher beschrieben werden wird.

Ein entscheidender Gesichtspunkt für die Fälschungssicherheit ergibt sich aber auch daraus, daß die beiden Schutzschichten mit der dazwischen liegenden Datenschicht (separat oder unmittelbar auf eine Schutzschicht aufgedruckt) weitgehend homogen, also über ihre gesamte Fläche einheitlich und untrennbar verbunden werden. Diese homogene Verbindung kann mit einem geeigneten Klebemittel erfolgen. Bei einer erprobten Ausführungsform der Erfindung dagegen wurde ein Druckversiegelungsverfahren - mit oder ohne Wärmeanwendung, je nach Material - angewendet, das ausgezeichnete Ergebnisse lieferte. Die Karte war nach der

0031525

- 6 -

Versiegelung ein einheitlicher homogener Körper. Eine Trennung der Karte in irgendeiner zu den Kartenhauptflächen parallelen Ebene wie bei den Karten mit Metallfolie ist ausgeschlossen.

Soll die erfindungsgemäße Karte mit Infrarot-Lesegeräten erfaßt werden, so ist die Zusammensetzung der in vorzugsweise sehr dünner Schichtstärke aufzutragenden Druckfarbe so beschaffen, daß die mit Farbe bedeckten Abschnitte der bedruckten Bahn für Infrarotlicht nicht oder nicht voll durchlässig sind. Eine Alternative besteht darin, eine Infrarotlicht absorbierende Druckfarbe zu verwenden. Soll die Karte dagegen induktiv gelesen werden, so muß die zu verwendende Druckfarbe mindestens eine induktiv wirksame Komponente, also in erster Linie eine Metallkomponente etwa auf Aluminium-, Silber- oder Kupferbasis (etwa in Form einer Lösung oder als Emulsion eines entsprechenden feinsten Metallpulvers) oder eine ferromagnetisch wirksame Komponente enthalten, wenn eine magnetische Auslesung vorgesehen ist.

Ausführungeformen der Erfindung werden nachfolgend unter Bezug auf die Zeichnung in Einzelheiten beschrieben. Es zeigen:

Fig. 1  eine Identifizierungskarte erfindungsgemäßer Art mit einer gedruckten codierten Information;

Fig. 2  den Schichtaufbau einer ersten Ausführungsform der Karte nach Fig. 1;

Fig. 3  den Schichtaufbau einer zweiten Ausführungsform der Karte nach Fig. 1 und

Fig. 4  das Blockschaltbild eines Infrarot-Lesegeräts zur Abtastung von Identifizierungskarten erfindungsgemäßer Art.

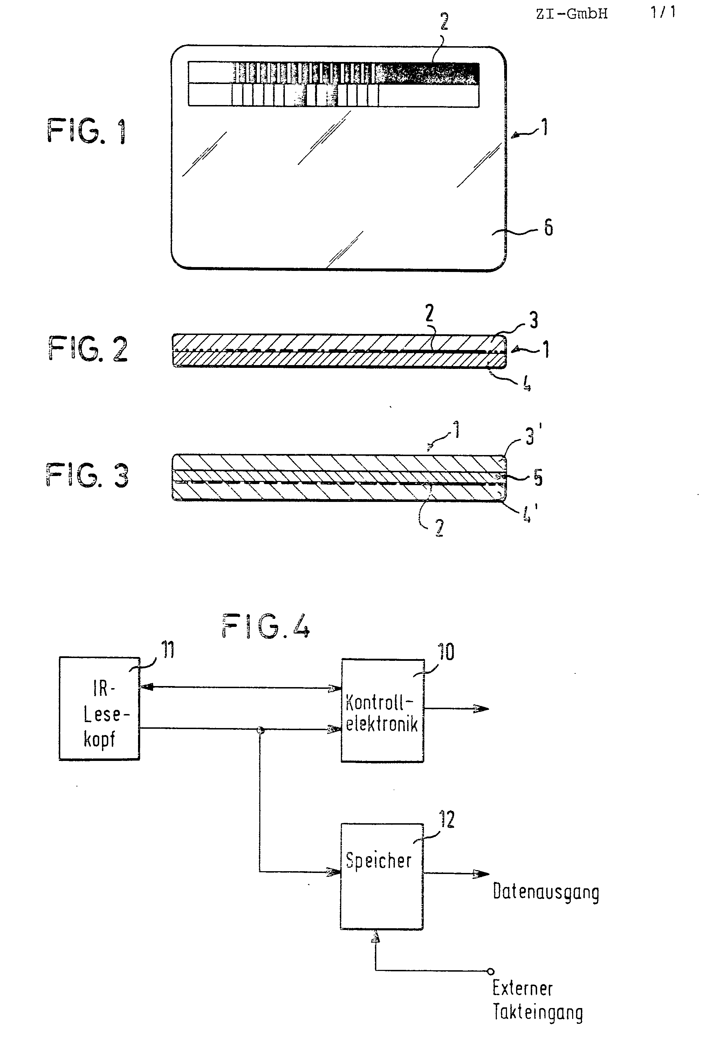

Mit Bezugshinweis 1 ist eine Identifizierungskarte in etwa natürlicher Größe in Draufsichtdarstellung bezeichnet. Wie dargestellt, enthält die Karte eine auf eine Innenfläche in codierter Form aufgedruckte Information 2, die aus Gründen der besseren Darstellung der Erfindung sichtbar gezeigt ist. Die Karte 1 umfaßt - wie die Fig. 2 und 3 erkennen lassen - eine erste Deckschicht 3 bzw. 3' und eine zweite (untere) Deckschicht 4 bzw. 4'. Bei der Ausführungsform nach Fig. 2 ist die codierte Information unmittelbar auf die Innenfläche einer der beiden Deckschichten 3 oder 4 aufgedruckt. Bei der Ausführungsform nach Fig. 3 dagegen ist eine Zwischenschicht 5 vorgesehen, die als Trägerschicht für die aufzudruckende Information 2 dient. Die beiden Deckschichten 3, 3' bzw. 4, 4' sind in der Regel mindestens für normales Licht, insbesondere aber für elektromagnetische Wellen mit einer kürzeren Wellenlänge als es dem Bereich des Ultrarotlichts entspricht undurchlässig, so daß die codierte Information 2 mindestens mit freiem Auge von außen nicht erkennbar ist. Ein Datenfeld 6 dient zur Aufnahme einer von außen auf eine der Deckschichten aufzudruckender oder in diese Schutzschicht einzuprägenden sichtbaren Information, wie Name, Adresse, Kontonommer usw. des Karteninhabers. Über den Deckschichten kann gegebenenfalls jeweils eine in der Zeichnung nicht dargestellte dünne Schutzschicht aus einem harten abriebfesten Kunststoffmaterial aufgetragen sein. Die sichtbare Prägung oder der Aufdruck der mit bloßem Auge lesbaren Information kann dann auch nur in bzw. auf einer oder beiden Deckschicht(en) erfolgen.Das Feld 6 der sichtbaren Daten kann selbstverständlich auch über den Bereich der im Inneren der Karte enthaltenen gedruckten codierten Information 2 erstreckt sein. Erwähnt sei noch, daß die aus den Fig. 2 und 3 entnehmbare Dicke der Karte 1 gegenüber den tatsächlichen Abmessungen vergrößert ist, um einige nachfolgend noch erläuterte charakteristische Merkmale der Erfindung besser zu verdeutlichen.

Wie bereits oben kurz erwähnt, wird zum Drucken der codierten Information 2 eine Farbe verwendet, die sich einerseits insbesondere im Hoch-, Flach- und Offsetdruck oder im Siebdruck gut verarbeiten läßt, und die andererseits im getrockneten Zustand für Infrarotlicht nicht oder nicht voll durchlässig ist, so daß die in Fig.1 dunklen Bereiche der Information 2 IR-Strahlung reflektieren, wenn die beiden dargestellten Spuren der Information 2 beim Durchschieben der Karte durch ein Infrarot-Lesegerät sukzessive mit einer oder mehreren Rotlichtquellen, beispielsweise Galliumarsenid-Halbleiterdioden, bestrahlt werden. In diesem Fall muß mindestens eine der Schutzschichten 3, 3' bzw. 4, 4' für Infrarotlicht durchlässig sein. Vorzugsweise sollten aber beide Schutzschichten IR-durchlässig sein, weil sich in diesem Fall mit Durchlicht arbeiten und eine besonders einfache Konstruktion eines Kartenlesegeräts verwirklichen läßt.

In einer alternativen Ausführungsform der Erfindung kann die zum Drucken der codierten Information verwendete Farbe eine induktiv wirksame Komponente, insbesondere einen Metallanteil in feinstverteilter Form oder eine Metallverbindung enthalten, so daß eine Informationsauslesung mit magnetischen bzw. elektromagnetischen Leseköpfen eines Lesegeräts erfolgen kann.

In einer weiteren vorteilhaften Ausgestaltungsform der Erfindung kann eine zweifache oder auch kombinierte Abtastmöglichkeit dadurch vorgesehen werden, daß die zum Drucken der codierten Information verwendete Farbe einerseits für Infrarotlicht nicht oder nicht voll durchlässig aber andererseits auch induktiv wirksam ist. Diese zweifache Wirksamkeit der aufgedruckten Informationsschicht kann auch durch zweilagiges Bedrucken erreicht werden, wobei beispielsweise beim ersten Druckdurchgang die UR-undurchlässige Farbschicht und beim zweiten Durchgang die induktiv wirksame Farbschicht aufgedruckt wird.

Hinsichtlich der verwendbaren Codes und der Informationssicherung besteht mit der Erfindung ein weites Feld von Möglichkeiten. Bei der in Fig. 1 dargestellten relativ

0031525

- 9 -

einfachen Ausführungsform besteht die Information 2 aus zwei übereinander liegenden Informationsstreifen. Beim oberen Streifen sind die Abschnitte zwischen den hellen und dunklen Farbbereichen, also zwischen den JA/NEIN-Übergängen kleiner gewählt als beim unteren Streifen. Aus der Kombination der Anzazl der Position und der relativen Phasenlage der einzelnen Informationsstellen zueinander, aber auch durch zusätzliche Code-Sicherungselemente in den einzelnen Streifen läßt sich beim Durchlauf der Karte durch das Lesegerät, also beim seriellen Abtasten der einzelnen Informationsstreifen einerseits eine hohe Abtastsicherheit durch redundante Prüf-Bits und andererseits eine hohe Fälschungssicherheit gewährleisten, weil die Kombination aus mehreren Codes ohne Zuhilfenahme elektronischer Rechenmittel kaum zu entschlüsseln ist.

Die Fälschungssicherheit wird aber auch - wie bereits erwähnt - entscheidend durch die Tatsache erhöht, daß der Code nicht geändert werden kann, weil die Karte nach dem Versiegeln ein einheitlicher untrennbarer Körper ist.

Die zum Drucken der codierten Information 2 verwendete Farbe enthält vorzugsweise eine chemische Komponente, die beim Versiegeln sich untrennbar mit dem Folienmaterial und/gegebenenfalls mit dem Kleber und dem Folienmaterial der Schutzschichten verbindet.

Bei der Ausführungsform nach Fig. 3 ist die mit der Information 2 bedruckte Trägerschicht 5 bei der fertiggestellten Karte ebenfalls homogen mit den Schutzschichten 3', 4' verbunden. Um die Homogenität der Karte über im wesentlichen ihre gesamte Fläche zu verdeutlichen, ist in den Schnittdarstellungen der Fig. 2 und 3 eine durchgehende Schraffierung gewählt und die Trennlinie zwischen den

0031525

- 10 -

beiden Deckschichten 3 und 4 in Fig. 2 bzw. zwischen den Schichten 3', 5 und 4', 5 ist jeweils nur gestrichelt angedeutet.

Außer der zweilagigen Aufbringung der codierten Information, wobei die eine Farbschicht speziell für IR-Licht nicht oder nicht voll durchlässig und die andere für induktive Auslesung geeignet ist, kann auch eine serielle Anordnung der beiden, insgesamt die codierte Information 2 bildenden Farbschichten vorgesehen sein. Dies bedeutet, daß ein Teil der codierten Information in einem Teilbereich der Karte mit für IR-Licht nicht oder nicht voll durchlässiger Farbe gedruckt wird, während ein anderer Abschnitt oder mehrere andere Abschnitte mit einer Farbe gedruckt werden, die induktiv wirksam ist, also eine Metallkomponente enthält. Beim Durchlauf der Karte durch das für Infrarot- und induktive Auslesung geeignete Kartenlesegerät werden dann die unterschiedlichen wirksamen Abschnitte der gedruckten codierten Information seriell einmal durch die Infrarot-Leseelemente und zum anderen durch induktive Auslesemittel erfaßt. Dabei können die Verteilung und der relative Abstand der einzelnen mit unterschiedlicher physikalischer Aktivität versehenen Farbabschnitte als zusätzliches Element der Informationssicherung eingesetzt werden. Nur eine Karte, bei der die Abschnitte unterschiedlicher Farbe (IR-aktiv oder induktiv wirksam) genau festgelegten Abständen und einer bestimmten Abwechslungsfolge entsprechen, werden vom Kartenleser als "echt" akzeptiert - vorausgesetzt, daß die in der codierten Information selber enthaltenen Code-Sicherungselemente keine anderweitigen Zweifel an der Echtheit der jeweiligen Identifizierungskarte aufkommen lassen.

- 11 -

Die Fig. 4 zeigt das vereinfachte Blockschaltbild eines Infrarot-Lesegeräts, mit dem sich Identifizierungskarten erfindungsgemäßer Art lesen lassen.

Unter Steuerung durch eine Kontrollelektronik 10 erfaßt ein Infrarot-Lesekopf 11 die in eine nicht dargestellte Führung des Lesegeräts eingelegte und beispielsweise im Durchzug beförderte Identifizierungskart. Ein ENDE-Code-Signal gelangt vom Lesekopf 11 wiederum auf die Kontrollelektronik 10 und bewirkt gleichzeitig die Übernahme in eine zur Zwischenspeicherung dienende Speicherelektronik 12, die über ein extern eingebbares Taktsignal auslesbar ist. Die Speicherelektronik 12 kann beispielsweise ein vielstelliger Serien/Parallel-Umsetzer- und Speicherbaustein sein. Über den Datenausgang gelangen die vom Lesekopf 11 erfaßten Binärsignale in bit-paralleler Form entweder direkt auf einen Drucker oder auf einen Video-Monitor mit Bildspeichereinrichtung. Ebenso lassen sich modernd Thermokammdrucker oder dergleichen ansteuern.

- 12 -

PATENTANSPRÜCHE

1.    Mehrschichtige Identifizierungskarte mit in einer Datenschicht enthaltener, maschinell lesbarer, codierter Information und mit zwei die Datenschicht einschließenden und miteinander verbundenen Deckschichten,
d a d u r c h   g e k e n n z e i c h n e t ,   daß die
codierte Information der Datenschicht (2; 2, 5) mit einer
Druckfarbe aufgedruckt ist, die im ausgedruckten Zustand für
Infrarotlicht nicht oder nicht voll durchlässig ist, und
durch wenigstens eine der Deckschichten (3, 4) hindurch vom
Lesegerät erfaßbar ist.

2.    Identifizierungskarte nach Anspruch 1,
d a d u r c h   g e k e n n z e i c h n e t ,   daß die
codierte Information unmittelbar auf die Innenfläche einer
der Deckschichten (3 oder 4) aufgedruckt ist, so daß die
Innenfläche der betreffenden Deckschicht die Datenschicht
bildet.

3.    Identifizierungskarte nach Anspruch 1,
d a d u r c h   g e k e n n z e i c h n e t ,   daß die
codierte Information auf eine zwischen den Deckschichten
eingesiegelte separate Trägerschicht (5) aufgedruckt ist.

4.    Identifizierungskarte nach einem der vorstehenden
Ansprüche,   d a d u r c h   g e k e n n z e i c h n e t ,
daß die verwendete Druckfarbe eine Metallkomponente enthält.

- 13 -

5. Identifizierungskarte nach einem der vorstehenden Ansprüche 1 bis 3, d a d u r c h   g e k e n n z e i c h n e t , daß die verwendete Druckfarbe eine erste Komponente, die für Infrarotlicht nicht oder nicht voll durchlässig ist, und eine zweite Komponente enthält, die mit induktiven oder kapazitiven Lesegeräten selektiv erfaßbar ist.

6. Identifizierungskarte nach Anspruch 5, d a d u r c h   g e k e n n z e i c h n e t , daß die beiden Druckfarbenkomponenten in zwei Schichten übereinander aufgebracht sind.

7. Identifizierungskarte nach einem der vorstehenden Ansprüche, d a d u r c h   g e k e n n z e i c h n e t , daß die die codierte Information tragende Datenschicht einschließenden Deckschichten (3, 4) über ihre gesamte Fläche im wesentlichen homogen miteinander verbunden sind.

8. Identifizierungskarte nach Anspruch 7, d a d u r c h   g e k e n n z e i c h n e t , daß die beiden Deckschichten miteinander verklebt sind.

9. Identifizierungskarte nach Anspruch 8, d a d u r c h   g e k e n n z e i c h n e t , daß die beiden Deckschichten durch Druck und/oder Wärmeeinwirkung weitgehend homogen miteinander verbunden worden sind.

10. Identifizierungskarte nach einem der vorstehenden Ansprüche, d a d u r c h   g e k e n n z e i c h n e t , daß die beiden Deckschichten für alles Licht kleiner Wellenlänge als jener von Infrarotlicht undurchlässig sind.

ZI-GmbH

0031525

- 14 -

11. Identifizierungskarte nach Anspruch 3 in Verbindung
mit Anspruch 8, d a d u r c h  g e k e n n z e i c h n e t ,
daß die separate Trägerschicht aus demselben Material wie
die Deckschichten oder aus einem Material besteht, das sich
bei einem geeigneten Verbindungsverfahren im wesentlichen
homogen und zu einer untrennbaren Einheit mit den Schutzschichten verbindet.

12. Identifizierungskarte nach einem der vorstehenden
Ansprüche, d a d u r c h  g e k e n n z e i c h n e t ,
daß dieDeckschichten aus einem PVC-Folienmaterial hergestellt
sind und daß über den  Deckschichten eine Schutzschicht aus
einem abriebfesten, harten Kunststoffmaterial aufgebracht
ist.

FIG. 1

FIG. 2

FIG. 3

FIG.4